(19) Europäisches Patentamt / European Patent Office / Office européen des brevets

(11) **EP 4 349 894 A1**

(12) **EUROPEAN PATENT APPLICATION**
published in accordance with Art. 153(4) EPC

(43) Date of publication:
**10.04.2024 Bulletin 2024/15**

(21) Application number: **22810957.5**

(22) Date of filing: **18.03.2022**

(51) International Patent Classification (IPC):
**C08J 11/12** (2006.01)    **B29B 17/02** (2006.01)

(52) Cooperative Patent Classification (CPC):
**B29B 17/02; C08J 11/12;** Y02W 30/62

(86) International application number:
**PCT/JP2022/012719**

(87) International publication number:
**WO 2022/249680 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021  JP 2021090412**

(71) Applicant: **Fuji Design Co., Ltd.**
**Ono City, Hyogo 675-1311 (JP)**

(72) Inventors:
• **SUGINO, Morihiko**
  **Ono City, Hyogo 6751311 (JP)**
• **TOJIRI, Takuya**
  **Ono City, Hyogo 6751311 (JP)**

(74) Representative: **Müller-Boré & Partner**
**Patentanwälte PartG mbB**
**Friedenheimer Brücke 21**
**80639 München (DE)**

(54) **RECYCLED-CARBON-FIBER BUNDLE COMPOSITION AND PRODUCTION METHOD THEREFOR**

(57)    An object is to establish practical technology in which an operation of compounding with matrix resin for reusing recovered bundled bodies in the form of tows becomes more stable and physical properties of a produced molded body become more stable.

A recycled-carbon-fiber tow composition comprising:

a recycled carbon fiber tow taken from a carbon-fiber-reinforced thermosetting resin molded body; and
a surface modifier having a chemical functional group (hereinafter, referred to as second chemical functional group) that has chemical affinity with a chemical functional group (hereinafter, referred to as first chemical functional group) existing on a surface of the carbon fiber, wherein

the recycled carbon fiber tow is formed such that carbon fibers are bundled into a tow with amorphous carbon that substantially contains no resin residue,
the recycled-carbon-fiber tow composition contains 0.1 to 1 weight% of the surface modifier when an entirety of the recycled-carbon-fiber tow composition is 100 weight%, and
an amount of residual carbon content measured when the recycled-carbon-fiber tow composition has been heated in a condition of 600°C×60 minutes is 1 to 5 weight%.

[FIG. 1]

**Description**

TECHNICAL FIELD

The present invention provides a composition containing a recycled carbon fiber (hereinafter sometimes referred to as rCF) tow taken from a carbon-fiber-reinforced thermosetting resin (hereinafter sometimes referred to as CFRP) molded body, and a method for producing thereof.

BACKGROUND ART

CFRP molded bodies formed by compounding and blending carbon fibers in thermosetting matrix resin have been highly utilized as structure materials that are required to have high strength and high elasticity for aerospace planes and racing cars. The CFRP molded bodies have been widely utilized more and more in recent years, and have been, for example, highly utilized for thick thickness molded bodies for wind power blade and filament winded natural gas cylinders (hereinafter, may be referred to as CNG cylinder). The CFRP molded body is frequently utilized for not only the above-described large products but also frames of sports goods such as tennis rackets, and casings of commonplace electronic devices such as note book personal computer, tablet terminals, and mobile phones.

Such expansion of markets for CFRP molded bodies causes disposal of a large amount of used CFRP molded bodies and a large amount of CFRP end materials or prepreg end materials generated by trimming during production. From the viewpoint of effective utilization of resources, reasonable and economic recovery technology is required to be established. However, at present, useful recovery technology has not been established yet, so that most of them are actually disposed of in landfills as they are. However, carbon fibers in CFRP molded bodies have electric conductivity, and, if fragments of the CFRP molded bodies are scattered into the air from soil in the landfills, a problem arises that electrical interference or radio wave interference may be caused in nearby electric devices, or a negative influence may be unexpectedly exerted on human bodies. Moreover, for example, it is indicated that, also when they are incinerated by mistake, a similar problem that carbon fibers are scattered during the process may arise. Meanwhile, the tendency of expanded utilization of CFRP molded bodies requires further increased production of carbon fibers. However, a large amount of energy needs to be consumed for newly producing carbon fibers, and cost is thus increased, and furthermore, there is a concern about environmental issues of increasing emission of carbon dioxide. Ultimately, the initial object of developing technology for efficiently recovering carbon fibers from CFRP molded bodies is required to be achieved.

As such recovery technology, for example, the technology disclosed in Patent Documents 1 and 2 and the technology disclosed in Non-Patent Document 1 written by an inventor of the present invention as one of the coauthors, have been known. Furthermore, for example, the technology developed by the inventors of the present invention and disclosed in Patent Document 3 as a patent publication, has been known. Patent Document 1 discloses a carbon-fiber-reinforced plastic processing method in which pyrolysis of plastic is performed by heating carbon-fiber-reinforced plastic in a gas atmosphere in which a concentration of oxygen ranges from 3 to 18 volume% and a temperature range from 300 to 600°C without combustion. Patent Document 2 discloses a carbon short fiber manufacturing method in which a group of carbon fibers bound by resin is ground into the form of fibers in a range from 100 $\mu$m to 3 mm, the fibers are thereafter classified and sorted according to fiber lengths, and one or more kinds of the classified fibers are subjected to thermolysis at 350 to 500°C in a place filled with the decomposition gas for ground products. Non-Patent Document 1 discloses a method in which CFRP molded bodies are placed in an infrared heating furnace, heated to 400°C at a temperature increase rate of 50°C/minute while an air flow having a flow rate of 0.3 m/minute is formed, and maintained for 120 minutes, to recover carbon fibers. Patent Document 3 indicates that recycled carbon fiber tows can be produced such that carbon fibers having an average fiber length of 6 to 100 mm are bundled into a tow with an amorphous carbon precursor derived from thermosetting resin and a potential hydrogen amount based on mass is 600 to 8000 ppm, by using a method having such a configuration that, under a condition that CFRP molded bodies are heated at a temperature in a temperature range of 400°C or higher and lower than 480°C, a concentration of oxygen in atmosphere gas is controlled to be 15 to 19 volume % in a period up to the end of heating after the temperature reaches 300°C, and the CFRP molded bodies are maintained for at least one hour in a period after the temperature reaches 300°C until the temperature reaches 350°C and are maintained for at least 30 minutes at a temperature in a temperature range of 400°C or higher.

PRIOR ART DOCUMENTS

PATENT DOCUMENTS

Patent Document 1 : JP-A-H06-99160
Patent Document 2 : JP-A-H11-50338
Patent Document 3 : JP-A-2018-202810

NON-PATENT DOCUMENT

Non-Patent Document 1 : Kenji Ushikoshi, Nobuyuki Komatsu, Morihiko Sugino "Recycling of CFRP by Pyrolysis Method", Material, The Society of Materials Science, Japan, April, 1995, Vol. 44, No. 499, pp 428-431

DISCLOSURE OF THE INVENTION

PROBLEMS TO BE SOLVED BY THE INVENTION

Carbon fibers recovered by the technology disclosed in Patent Documents 1 and 2 and Non-Patent Document 1 are obtained in a non-bundled state in which matrix resin constituting the CFRP molded body is almost fully eliminated, and it has been extremely difficult to obtain carbon fibers having optimal fiber lengths in a uniform manner. For example, compounding itself of the carbon fibers having large fiber lengths with virgin resin by using a twin-screw extruder, for example, feeding itself of the carbon fibers from a side feeder during compounding of the resin for reusing the carbon fibers as reinforcing fibers has been physically difficult due to the entangled cotton-like outer appearance. Even if the difficulty is overcome and the compounding is performed, the carbon fibers cannot be uniformly dispersed in resin with efficiency. Meanwhile, there are problems that carbon fibers having small fiber lengths have powder-like outer appearance and are likely to be scattered in the environment, they often appear as if they smoke, and working environments are degraded, and furthermore, electrical interference is caused in electric devices, and, in addition, there is an intrinsic drawback that a function of reinforcing matrix resin cannot be expected due to excessively small fiber lengths. It is extremely difficult to classify and sort the recovered carbon fibers according to the fiber lengths. If the recovered carbon fibers having non-uniform fiber lengths are used as they are, the aforementioned problem cannot be avoided. Even if the recovered carbon fibers can be classified, carbon fibers having excessively large and small fiber lengths have no reuse value, and there is no choice but to dispose of the carbon fibers, and it must be said that completeness as recovering technology is substantially low.

On the other hand, in the above-described technology disclosed in Patent Document 3, carbon fibers having an average fiber length of 6 mm to 100 mm can be recovered so as to be bundled into a tow with an amorphous carbon precursor derived from thermosetting resin, by controlling a temperature and a concentration of oxygen in the recovery process, and therefore, the technology of reusing/utilizing carbon fibers has been increasingly spotlighted since the technology has suddenly reached a practical level (sustainable material accredited by the SDGs).

The inventors of the present invention have found, when making further examination for practical use of the technology, that CFRP molded bodies collected as objects to be recovered from communities, etc., or prepreg end materials as raw materials of the CFRP molded bodies have non-uniform shapes and sizes, in particular, plate-shaped bodies have non-uniform plate thicknesses, and this causes a proper/improper condition for processing the CFRP molded bodies, and problems with stability in operation and stability of physical properties of produced molded bodies slightly arise in a stage of compounding with matrix resin for the reuse, regardless of no inconvenience being found in outer appearance of the recovered bundled body in the form of a tow.

An object of the present invention is to establish practical technology in which, in an operation of compounding with matrix resin for reusing recovered bundled bodies in the form of tows, strands can be stably formed so as to reduce separation of fibers in a compounded product of recycled carbon fibers (rCF) and resin, which is discharged from a nozzle of a twin-screw extruder, and physical properties of a produced molded body become more stable.

SOLUTIONS TO THE PROBLEMS

The present invention is as follows.

[1] A recycled-carbon-fiber tow composition comprising:

a recycled carbon fiber tow taken from a carbon-fiber-reinforced thermosetting resin molded body; and
a surface modifier having a chemical functional group (hereinafter, referred to as second chemical functional group) that has chemical affinity with a chemical functional group (hereinafter, referred to as first chemical functional group) existing on a surface of the carbon fiber, wherein
the recycled carbon fiber tow is formed such that carbon fibers are bundled into a tow with amorphous carbon that substantially contains no resin residue,

the recycled-carbon-fiber tow composition contains 0.1 to 1 weight% of the surface modifier when an entirety of the recycled-carbon-fiber tow composition is 100 weight%, and

an amount of residual carbon content measured when the recycled-carbon-fiber tow composition has been heated in a condition of 600°C×60 minutes is 1 to 5 weight%.

[2] The recycled-carbon-fiber tow composition according to [1], wherein

the first chemical functional group is at least one selected from a carboxyl group, an aldehyde group, and a carbonyl group, and

the second chemical functional group is at least one selected from a hydroxy group, an epoxy group, an acryloyl group, a phenyl group, an acrylic group, a urethane group, a silanol group, a siloxane group, an ester group, an imido group, a nitrile group, a stearate group, and a maleic acid group.

[3] A sheet formed from the recycled-carbon-fiber tow composition according to [1] or [2].

[4] A method for producing the recycled-carbon-fiber tow composition according to [1] or [2], the method comprising:

a step of heating a carbon-fiber-reinforced thermosetting resin molded body to a temperature in a temperature range of 400°C or higher and 480°C or lower in a heating oven, and obtaining a recycled carbon fiber tow in which carbon fibers are bundled into a tow with amorphous carbon that substantially contains no resin residue; and

a step of bringing thus obtained recycled carbon fiber tow into contact with a liquid containing a surface modifier that has the second chemical functional group having chemical affinity with the first chemical functional group existing on a surface of the carbon fibers, and thereafter drying an obtained product, wherein

the step of obtaining the recycled carbon fiber tow includes heating the carbon-fiber-reinforced thermosetting resin molded body at a temperature in at least a temperature range of 300°C or higher and 400°C or lower in combustion gas flowing in the heating oven, and thereafter maintaining an obtained product at a temperature in a temperature range of 400°C or higher and 480°C or lower, in atmosphere gas in which a concentration of oxygen is 16 to 18 volume %, for at least 30 minutes.

[5] The method according to [4], wherein combustion gas in the heating oven has an average flow rate of 0.1 to 10 m/second.

[6] The method according to [4] or [5], wherein the heating at a temperature in the temperature range of 300°C or higher and 400°C or lower is performed until fuming from the carbon-fiber-reinforced thermosetting resin molded body ends.

EFFECTS OF THE INVENTION

According to the present invention, recycled carbon fiber tows taken from a carbon-fiber-reinforced curable resin molded body are mixed with the surface modifier having the chemical functional group having chemical affinity with carbon fibers contained in the tow to form a composition. Thus, an operation of compounding with matrix resin for reusing the recycled carbon fiber tows can be further stabilized. Furthermore, a sheet formed from the recycled-carbon-fiber tow composition of the present invention has good mechanical characteristics. Moreover, according to the present invention, physical properties of the produced molded body can be further stabilized.

BRIEF DESCRIPTION OF THE DRAWING

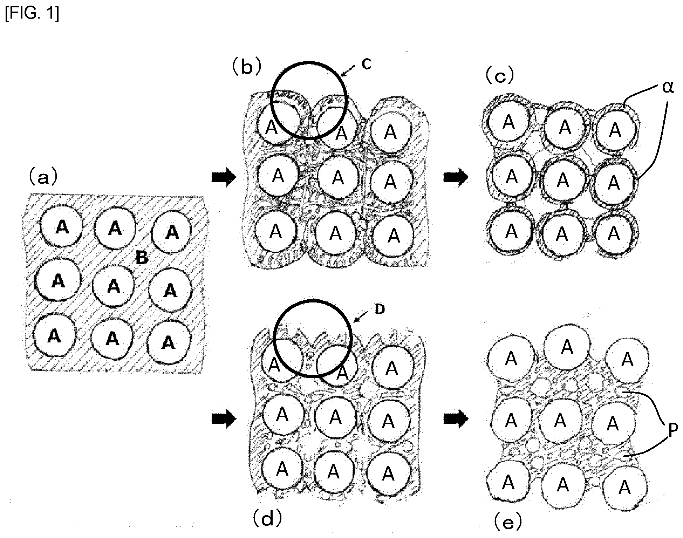

[FIG. 1] FIG. 1 is a schematic diagram illustrating a state of a CFRP molded body in the case of the CFRP molded body being subjected to heat treatment, (a) is a schematic diagram illustrating the CFRP molded body having not been subjected to heat treatment yet, (b) is a schematic diagram illustrating a state of the CFRP molded body in the case of heat treatment having been performed at 300°C to 400°C, (c) is a schematic diagram illustrating a state of the CFRP molded body in the case of heat treatment having been performed at 400°C to 480°C, (d) is a schematic diagram illustrating a state of the CFRP molded body in the case of heat treatment having been performed at 500°C, and (e) is a schematic diagram illustrating a state of the CFRP molded body in the case of heat treatment having been performed at 600°C.

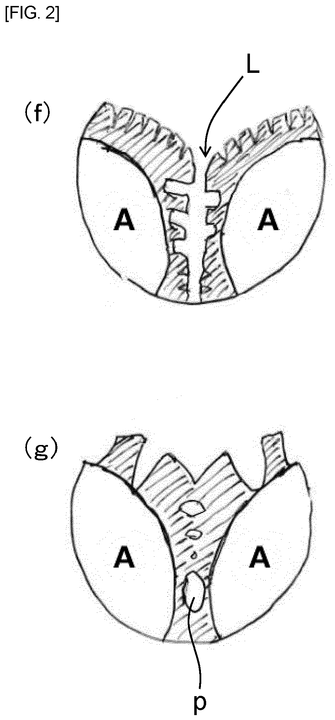

[FIG. 2] (f) of FIG. 2 is a schematic diagram illustrating a surface portion, surrounded by a circle C, of the CFRP molded body illustrated in (b) of FIG. 1 in an enlarged manner, and (g) of FIG. 2 is a schematic diagram illustrating a surface portion, surrounded by a circle D, of the CFRP molded body illustrated in (d) of FIG. 1 in an enlarged manner.

MODE FOR CARRYING OUT THE INVENTION

A recycled-carbon-fiber (rCF) tow composition according to the present invention is a recycled-carbon-fiber tow composition that includes a recycled carbon fiber tow taken from a carbon-fiber-reinforced thermosetting resin (CFRP) molded body, and a surface modifier having a second chemical functional group that has chemical affinity with a first chemical functional group existing on surfaces of the carbon fibers. The recycled carbon fiber tow is formed such that carbon fibers are bundled into a tow with amorphous carbon that substantially contains no resin residue. The recycled-carbon-fiber tow composition contains 0.1 to 1 weight% of the surface modifier when the entirety of the recycled-carbon-fiber tow composition is 100 weight%. An amount of residual carbon content measured when the recycled-carbon-fiber tow composition has been heated in a condition of 600°C×60 minutes is 1 to 5 weight%.

The rCF tow included in the rCF tow composition according to the present invention is taken from a CFRP molded body. The CFRP molded body is obtained by dispersing carbon fibers as a reinforcing member in a thermosetting resin molded body, and can also be referred to as carbon fibers bound by thermosetting resin. Examples of thermosetting resin serving as a binder include unsaturated polyester resin, epoxy resin, vinylester resin, bismaleimide resin, phenol resin, cyanate resin, and polyimide resin.

The CFRP molded bodies are specifically used for aerospace planes (for example, rockets, artificial satellites, military aircrafts, passenger aircrafts, helicopter blades, etc.,), racing cars, motorbikes, bicycles, railroad vehicles, deep ocean survey vehicles, racing boats, measurement devices, robot arms for transportation, wind power blade, compressed natural gas tanks (CNG tanks), golf shafts, tennis rackets, fishing rods, wheelchairs, structures such as artificial bones, and casings of mobile devices such as note book personal computer, tablets, and mobile phones.

The rCF tows are taken and obtained from such CFRP molded bodies, and carbon fibers are bundled into a tow with amorphous carbon. The amorphous carbon refers to a carbon component generated by heating thermosetting resin in a heating oven at a temperature in at least a temperature range of 300°C or higher and 400°C or lower in combustion gas flowing in the heating oven, and thereafter maintaining the obtained product at a temperature in a temperature range of 400°C or higher and 480°C or lower in atmosphere gas in which a concentration of oxygen is 16 to 18 volume%, for at least 30 minutes. The amorphous carbon substantially contains no thermosetting resin residue. The "substantially" means that an amount of the thermosetting resin residue is 5 weight% or less when the entirety of the rCF tow is 100 weight%. The potential hydrogen amount of the rCF tow is preferably 8000 ppm or less.

The potential hydrogen amount can be measured by using a hydrogen analyzer. As the hydrogen analyzer, for example, "EMGA-821" manufactured by HORIBA, Ltd. can be used.

The tow-like form refers to a bundle-like form. That carbon fibers are bundled into a tow with amorphous carbon means that multiple carbon fibers are aligned, and the carbon fibers are bound by amorphous carbon into a bundle-like form. The amorphous carbon included in the rCF tow is separated from carbon fibers in the course of the rCF tow being used as a raw material of CFRP and the like, and is mixed in compound resin. The mixed amorphous carbon has higher chemical stability than the compound resin, and thus, seldom exerts an influence on mechanical characteristics of the CFRP and the like. Whether amorphous carbon is present or absent can be confirmed by using, for example, a scanning electron microscope.

The average fiber length of the carbon fibers constituting the rCF tow is, but is not particularly limited to, for example, preferably 6 mm to 100 mm. When the average fiber length of the carbon fibers is less than 6 mm, the carbon fibers are excessively short, so that mechanical characteristics of the CFRP molded body obtained by using the rCF tows may not be sufficiently enhanced. Therefore, the average fiber length of the carbon fibers is preferably 6 mm or more, more preferably 8 mm or more, even more preferably 10 mm or more, and particularly preferably 25 mm or more. However, when the average fiber length of the carbon fibers is excessively long, handleabiltiy may be degraded, the rCF tow composition according to the present invention is not easily fed to a forming machine, and it is difficult to use the rCF tow composition as a recycled raw material. Therefore, the average fiber length of the carbon fibers is preferably 100 mm or less, more preferably 80 mm or less, and even more preferably 50 mm or less.

The number of the carbon fibers constituting the rCF tow is, but is not particularly limited to, for example, preferably 500 to 480000 from the viewpoint of further enhancing handleability of the rCF tow. The number of the carbon fibers is more preferably 1000 or more and even more preferably 5000 or more. The number of the carbon fibers is more preferably 400000 or less and even more preferably 300000 or less.

The rCF tow composition according to the present invention includes a surface modifier in addition to the rCF tow, and the surface modifier has a second chemical functional group having chemical affinity with a first chemical functional group existing on surfaces of the carbon fibers contained in the rCF tow. Since the surface modifier is contained, even when the rCF tow is, for example, fed to a twin-screw extrusion-molding machine and used as a recycled raw material, fiber breakage of the carbon fibers can be prevented, and thus, generation of dust can be inhibited, and workability can be improved. Furthermore, in a case where the surface modifier is contained, wettability with matrix resin compounded when the rCF tows are used as a recycled raw material becomes better, so that the produced molded body can have enhanced mechanical characteristics.

In the formation of the rCF tow, it is considered that C-C covalent bonds are mainly contained, and, in addition thereto, ionic bonds and hydrogen bonds derived from carboxyl groups (-COOH groups) are slightly mixed. Carboxyl groups (-COOH groups) exist on the surface of amorphous carbon formed on the rCF surface. In the latest CFRP technology, $-SO_n$ (n=2 to 4) is contained by adding PES resin (polyethersulfone resin) as an impact value improver, and ionic bonding is mainly present. When such covalent bonds, ionic bonds, and hydrogen bonds exist, chemical affinity is determined to be present. In the rCF surface and the amorphous carbon surface, the entirety of the surfaces is not covered with these reactive groups, and carbon skeletons are exposed, and, in this case, chemical affinity is determined to be "absent". Therefore, the present invention has a gist of further enhancing a binding force of functional groups existing on the amorphous carbon, and the activity of the rCF surface or the like is enhanced according to kinds of resins to be used in a composite manner.

Specifically, the first chemical functional group existing on the surfaces of the carbon fibers is at least one selected from a carboxyl group, an aldehyde group, and a carbonyl group. However, $-SO_n$ (n=2 to 4) may be generated. $-SO_n$ is derived from thermoplastic resin (specifically, PES resin) that is added to epoxy resin as thermosetting matrix resin, for improving impact resistance.

Specifically, the second chemical functional group having chemical affinity with the first chemical functional group is at least one selected from a hydroxy group, an epoxy group, an acryloyl group, a phenyl group, an acrylic group, a urethane group, a silanol group, a siloxane group, an ester group, an imido group, a nitrile group, a stearate group, and a maleic acid group. Among them, the second chemical functional group preferably contains at least one selected from a hydroxy group, an epoxy group, an acrylic group, a urethane group, an ester group, an imido group, and a nitrile group. Particularly, the second chemical functional group more preferably contains at least one selected from a hydroxy group, an acrylic group, an imido group, and a nitrile group.

Examples of the surface modifier include an acrylic ester emulsion adhesive, watersoluble epoxy resin, and stearic acid or maleic acid used as an internal mold release agent of the resin, and salts thereof. The acrylic ester emulsion adhesive is available from, for example, TOAGOSEI CO., LTD. Maleic anhydride is available from, for example, Mitsubishi Chemical Corporation.

The surface modifier needs to be contained in a range of 0.1 to 1 weight% when the entirety of the rCF tow composition is 100 weight%. If the amount of the surface modifier is smaller than 0.1 weight%, since the amount of the surface modifier is excessively small, the rCF tows are likely to be disentangled, and, for example, generation of dust cannot be inhibited when the rCF tows are fed to an extrusion-molding machine and used as a recycled raw material, and working environment cannot be improved. Furthermore, in a case where the amount of the surface modifier is small, when the rCF tows are used as a recycled raw material, wettability with matrix resin to be compounded cannot be improved, and the produced molded body cannot have enhanced mechanical characteristics. Therefore, the amount of the surface modifier is 0.1 weight% or more, preferably 0.3 weight% or more, and even more preferably 0.5 weight% or more. However, if the amount of the surface modifier is more than 1 weight%, the excessively large amount of the surface modifier disadvantageously increases separation in drying and cutting process steps, and, furthermore, reduces strength of adhesion to the resin. Therefore, the amount of the surface modifier is 1 weight% or less, preferably 0.8 weight% or less, and even more preferably 0.5 weight% or less.

The amount of the surface modifier contained in the rCF tow composition can be measured according to a difference (reduction amount) between a mass obtained after a water content has been dried at 110°C×1 hour, and a mass at 250°C. In order to further enhance accuracy and identify a plurality of components, the surface-treated fibers are washed with a solvent and quantified after pressure reduction and drying, or the components are identified by an infrared absorption method, GPC, or the like.

An amount of residual carbon content measured when the rCF tow composition according to the present invention has been heated in a condition of 600°C×60 minutes is 1 to 5 weight%. The amount of residual carbon content refers to an amount of carbon content contained in the rCF tow composition, and a proportion of an amount of carbon content that volatilizes in a temperature range of 600°C or lower. In a case where the amount of residual carbon content is 1 weight% or more, when the rCF tow composition is compounded with matrix resin, very good disentangling property and dispersibility in the matrix resin, and good affinity are exhibited extremely uniformly over the entire region, and thus, compounding property of the rCF tow with respect to matrix resin can be improved. The amount of residual carbon content is preferably 3 weight% or more and more preferably 3.5 weight% or more. On the other hand, in a case where the amount of residual carbon content is 5 weight% or less, disentanglement smoothly progresses during compounding with matrix resin, and an effect of appropriately inhibiting rapid disentanglement from causing scattering, that is, inhibiting generation of dust is more effectively exhibited, and working environment can be maintained extremely excellent. The amount of residual carbon content is preferably 4.5 weight% or less and more preferably 4 weight% or less.

The amount of residual carbon content can be, for example, calculated according to the following equation by measuring change of a weight when the rCF tow composition is heated, by using a thermogravimetry (TG) apparatus, based on a mass before heating at 600°C for 60 minutes, and a mass after the heating.

$$\text{Amount of residual carbon content (weight\%)} = \frac{[\text{mass before heating} - \text{mass after heating}]}{[\text{mass before heating}]} \times 100$$

An atmosphere in which the thermogravimetry is performed is not particularly limited and the thermogravimetry may be performed in an air atmosphere. The amount of residual carbon content can also be calculated by putting a sample in a crucible, heating the sample in the air, and measuring a reduction amount between the mass before the heating and the mass after the heating.

In a case where a raw material is a prepreg end material, the heating condition may be 500°C×60 minutes. This is because, as compared with a CFRP end material, a prepreg end material has lower adhesion to matrix resin, a temperature at which the matrix resin is carbonized is low, and a density of the carbonized product is also low.

The rCF tow composition according to the present invention contains the rCF tow and the surface modifier. The rCF tow composition may contain, for example, a rubber component such as ethylene propylene rubber (EPDM), as another component. EPDM has good affinity with - SOs, and adhesiveness to PP resin can be improved.

By using the rCF tow composition obtained in the present invention, a non-crimped sheet having any large width can be produced by arranging recycled carbon fiber tows on a flat surface at the full size and connecting the bundles by a stitch sewing machine. In the non-crimped sheet, the recycled carbon fiber tows are arranged so as to be oriented in one direction. Therefore, angles of the carbon fiber tow directions of the wide sheets are changed to 0°, ±45°, and 90° to perform lamination, whereby a skeleton of a reinforcing structure by the continuous rCF can be obtained.

The sheet is uni-direction rCF sheet (UD-sheet) in which the carbon fiber tows are arranged so as to be oriented in one direction, fibers do not overlap each other, and the rCFs bundled in a tow with amorphous carbon are uniformly sized into a plane. The sheet can be easily impregnated with resin. Therefore, a wide UD sheet impregnated with thermoplastic resin can be produced without disordering alignment of the tows. The obtained sheets are laminated in a predetermined direction and compressed by a pressing machine to obtain any 3D structure molded product.

In a case where the surface modifier is not contained, the sheet is not easily impregnated with thermoplastic resin, so that, for example, pressing is necessary when the sheet is produced. Pressing performed for a long time period disorders the arrangement in the tow, and causes disorder or deviation between tow-formed bundles, so that the strength of the sheet is reduced.

Next, a method for producing the recycled-carbon-fiber (rCF) tow composition according to the present invention will be described.

The rCF tow composition can be produced by a method that includes

(1) a step of heating the CFRP molded body to a temperature in a temperature range of 400°C or higher and 480°C or lower in a heating oven, and obtaining an rCF tow in which carbon fibers are bundled in a tow with amorphous carbon that substantially contains no resin residue, and

(2) a step of bringing thus obtained rCF tow into contact with a liquid containing the surface modifier that has the second chemical functional group having chemical affinity with the first chemical functional group existing on surfaces of the carbon fibers, and thereafter drying the obtained product. The step (1) of obtaining the rCF tow needs to include (1a) heating the CFRP molded body at a temperature in at least a temperature range of 300°C or higher and 400°C or lower in combustion gas flowing in the heating oven, and

(1b) thereafter maintaining the obtained product at a temperature in a temperature range of 400°C or higher and 480°C or lower, in atmosphere gas in which a concentration of oxygen is 16 to 18 volume %, for at least 30 minutes.

By heating at a temperature in at least a temperature range of 300°C or higher and 400°C or lower in combustion gas flowing in the heating oven, matrix resin (thermosetting resin) contained in the CFRP molded body is dry-distilled and removed. By heating in combustion gas flowing in the heating oven, dry-distillation and removal of matrix resin can be sufficiently progressed while disturbance of the surface of the CFRP molded body by oxygen potential in air forming the dry-distillation atmosphere is avoided as much as possible. Through the dry-distillation and removal, 100% of the matrix resin is not removed, and amorphous carbon that substantially corresponds to an amount necessary for bundling carbon fibers into a tow is left.

After heating in a temperature range of 300°C or higher and 400°C or lower, heating to a temperature in a temperature range of 400°C or higher and 480°C or lower is subsequently performed. At this time, a concentration of oxygen in atmosphere gas is controlled to be in a range of 16 to 18 volume%, and a maintaining time in the temperature range is at least 30 minutes in order to stabilize amorphous carbon.

Thus, the heating treatment condition for the CFRP molded body is minutely controlled in two continuous separate stages, whereby the amount of residual carbon content can be adjusted to be in the above-described range.

Change of a state in which the carbon fiber reinforced thermosetting resin (CFRP) molded body is subjected to heat treatment will be described with reference to the drawings. In each figure, hatching, reference characters, or the like may be omitted. In such a case, the description or other figures may be referred to. Dimensions of various components in the figures may be different from actual dimensions in order to place a higher priority to easy understanding of the characteristics of the present invention.

FIG. 1 is a schematic diagram illustrating a state of a CFRP molded body in the case of the CFRP molded body being subjected to heat treatment, (a) of FIG. 1 illustrates the CFRP molded body having not been subjected to heat treatment yet, and A represents a carbon fiber and B indicated by inclined lines represents matrix resin.

Pyrolysis of the matrix resin of the CFRP molded body greatly changes depending on a temperature increase condition and a temperature range during heating. (b) of FIG. 1 is a schematic diagram illustrating a state of the CFRP molded body in the case of heat treatment having been performed at 300°C to 400°C. The pyrolysis of the matrix resin starts at or around 300°C, and pyrolytic gas is generated from the inside of the CFRP molded body. When the inner portion has also been uniformly heated as illustrated in (b), thermosetting resin is temporarily softened, and the decomposition gas generated in the inside is discharged to the surface. In the description herein, the surface refers to not only the surface of the CFRP molded body but also a gap in delamination (interlamellar separation occurs between the laminated carbon fiber UD sheets or carbon fiber cloths) caused in the process of temperature increase to 300°C or by pyrolysis at a temperature of 300°C to 400°C, and the decomposition gas generated in the inside is discharged, and the discharged gas is discharged from the space in the delamination to the outside of the system. When this reaction is continued, pores are continuously formed, and a gas flow path of the decomposition gas is generated as opening pores in the inside and can be ensured.

(f) of FIG. 2 is a schematic diagram illustrating a surface portion, surrounded by a circle C, of the CFRP molded body illustrated in (b) of FIG. 1 in an enlarged manner. As illustrated in (f), open pores inside the matrix are connected to the pore in the surface, and a gas flow path L is formed. Therefore, during the heat treatment, amorphous carbon around the carbon fibers A is attacked uniformly by oxygen and removed, and damage to the surfaces of the carbon fibers A is reduced.

(c) of FIG. 1 is a schematic diagram illustrating the CFRP molded body in a state where, after the state in (b) of FIG. 1, the temperature has been further increased to 400°C to 480°C, and heat treatment has been performed. As illustrated in (c), in a case where the temperature is increased to 400°C to 480°C, the open pores (opening holes) are widened, and the matrix resin B on the surfaces of the carbon fibers A is gasified so as to leave amorphous carbon $\alpha$ as a carbonized product.

On the other hand, (d) of FIG. 1 is a schematic diagram illustrating a state where the CFRP molded body in (a) of FIG. 1 has been subjected to heat treatment at 500°C. Since importance is placed on a recycle reaction time, the temperature is increased to 500°C in a relatively short time period. In this case, as illustrated in (d), decomposition of the matrix resin B of the CFRP molded body starts from the surface, and the matrix resin B is gasified and discharged, and, when the temperature of the inner portion at which heating has been delayed by the external heating reaches about 300°C, decomposition gas is generated. A part of the decomposition gas generated in the inner portion is discharged from the surface, and another part thereof is left in the inner portion and accumulated as pores. A part of the matrix resin B existing on the surface of the CFRP molded body is completely removed, and the carbon fiber A is exposed on the surface. The matrix resin in the inner portion between the carbon fibers A, or a portion near the surface of the CFRP molded body is carbonized and layered, and gas is hindered from being discharged from the inner portion.

(g) of FIG. 2 is a schematic diagram illustrating a surface portion, surrounded by a circle D, of the CFRP molded body illustrated in (d) of FIG. 1 in an enlarged manner. As illustrated in (g), when heating to 500°C is performed, amorphous carbon on the surface is removed, and cotton-like carbon fibers are formed and the oxidation of the surface progresses. Oxygen supplied from the surface of the CFRP molded body is hindered by the amorphous carbon layer, and is difficult to diffuse toward the inner portion, residual foams p are left in the CFRP molded body, and the carbon fiber A surrounded by the amorphous carbon layer is left fixed.

(e) of FIG. 1 is a schematic diagram illustrating the CFRP molded boy in a state where, after the state in (d) of FIG. 1, the temperature has been further increased to 600°C, and heat treatment has been performed. As illustrated in (d), in a case where the temperature is increased to 600°C, the carbon fiber A from which a carbonized layer has been removed due to the matrix resin being carbonized exists, an amorphous carbon layer which is in contact with the carbon fiber A and which does not contain pores and gas discharge openings exists, and, furthermore, closed pores (closed holes) P for which gas discharge openings are blocked exist at the center portion and are left as a resin content in a state where gas discharge is left incomplete. To date, resin has been removed at a high temperature of 500°C or higher, and thus, corrosion of the carbon fiber A on the surface which has already been exposed progresses due to oxidization, and the inherent mechanical performance cannot be reproduced. Furthermore, in addition to amorphous carbon which is left unremoved, undecomposed resin also exists partially in the inner portion.

Hereinafter, a method for producing the rCF tow composition according to the present invention will be described in detail.

(1) Step of obtaining rCF tow

In the step of obtaining the rCF tow, the CFRP molded body is heated to a temperature in a temperature range of 400°C or higher and 480°C or lower. In a case where a temperature reached by heating is in a temperature range of 400°C or higher and 480°C or lower, the rCF tow in which carbon fibers are bundled in a tow with amorphous carbon that substantially contains no resin residue can be obtained. Furthermore, an amount of residual carbon content contained in the rCF tow composition can be adjusted in a predetermined range. That is, in a case where the temperature reached by heating is lower than 400°C, the heating is insufficient, an excessively large amount of amorphous carbon is left, and carbon fibers cannot be separated as an assembly of single fibers. Therefore, the temperature reached by heating is 400°C or higher, preferably 410°C or higher, and more preferably 420°C or higher. However, when the temperature reached by heating is higher than 480°C, heating is excessively performed, amorphous carbon is excessively removed, the surfaces of carbon fibers become inactive smooth surfaces, no bundling force is exerted, and workability for compounding with matrix resin cannot be improved. Furthermore, uniformity for removing amorphous carbon cannot be maintained, and wettability with matrix resin, which is required for obtaining CFRP or the like, is degraded, and the rCF tow having stable physical properties cannot be obtained. Therefore, the temperature reached by heating is 480°C or lower, preferably 470°C or lower, and more preferably 460°C or lower.

(1a) At least a temperature range of 300°C or higher and 400°C or lower

When the CFRP molded body is heated to a temperature in a temperature range of 400°C or higher and 480°C or lower, the CFRP molded body is heated at a temperature in at least a temperature range of 300°C or higher and 400°C or lower in combustion gas flowing in the heating oven. By heating the CFRP molded body in flowing combustion gas, the CFRP molded body can be uniformly heated without combustion thereof.
An average flow rate of combustion gas in the heating oven in at least a temperature range of 300°C or higher and 400°C or lower is, for example, preferably 0.1 m/second or more. In a case where the average flow rate of the combustion gas is 0.1 m/second or more, the temperature of the CFRP surface can be easily controlled, and therefore, heating can be uniformly performed without uneven heating. The average flow rate of the combustion gas is more preferably 0.5 m/second or more and even more preferably 1 m/second or more. A higher average flow rate of combustion gas in the heating oven is better. The higher the average flow rate is, the higher the surface diffusion rate from the surface of the CFRP molded body is, and the internal diffusion rate and the thermal diffusion rate are enhanced. Thus, the thermosetting resin decomposition rate and the carbonization rate after the decomposition can be increased. Although the upper limit of the average flow rate of the combustion gas is not particularly limited, since an excessively high average flow rate may cause scattering depending on the mass of the CFRP molded body placed in the heating oven, the average flow rate of the combustion gas is preferably 10 m/second or lower, more preferably 9 m/second or lower, and even more preferably 8 m/second or lower. The flow rate of combustion gas in the heating oven can be controlled by an air blower disposed in the heating oven. The flow rate of combustion gas in the heating oven can be measured by a gas flowmeter disposed in the heating oven.
A concentration of oxygen in atmosphere gas for heating in at least a temperature range of 300°C or higher and 400°C or lower is, but is not particularly limited to, for example, preferably 16 to 18 volume%. When the concentration of oxygen is smaller than 16 volume%, a pyrolysis rate constant is extremely lowered even at the same treatment temperature, and pyrolysis is not sufficiently performed, and furthermore, undecomposed resin is mixed in exhaust gas, is in a soot-like state or a tar-like state, and is accumulated in a pipe wall of an exhaust system, and an oxidation catalyst for generally oxidizing hydrocarbon-based gas is poisoned, and activity may be lost. When the concentration of oxygen is more than 18 volume%, an internal diffusion rate of oxygen is increased, and heat generation is increased in the inside whereas a diffusion rate of oxidation heat generated in the inside cannot be increased, and the oxidation heat reaches the surface with delay, and the oxidation heat cannot be removed from the surface with high-speed heat flow, so that internal heat generation cannot be controlled, and combustion may be consequently caused.
A concentration of oxygen in atmosphere gas in at least a temperature range of 300°C or higher and 400°C or lower is preferably controlled by mixing preheated air in atmosphere gas flow in the heating oven.
A concentration of oxygen in atmosphere gas for heating the CFRP molded body from room temperature to 300°C is not particularly limited. However, for example, the concentration of oxygen is preferably controlled to be in a range of 13 to 19 volume%. In a case where the concentration of oxygen is 13 volume% or more, heating can be performed without discharging incomplete combustion gas. The concentration of oxygen is more preferably 14 volume% or more and even more preferably 15 volume% or more. However, when the concentration of oxygen is more than 19 volume%, an amount of oxygen becomes excessively large, and the combustion may become non-uniform, or explosion may occur in the heating oven. Therefore, the concentration of oxygen is preferably 19 volume% or less, more preferably 18 volume% or less, and even more preferably 17 volume% or less.

The CFRP molded body is preferably heated at a temperature in at least a temperature range of 300°C or higher and 400°C or lower until decomposition of thermosetting resin ends. When heating to 400°C or higher is performed before end of the decomposition, the CFRP molded body is rapidly oxidized, and thus, temperature control becomes difficult, white smoke or unusual odor may be caused, and the working environment is thus degraded. Furthermore, the temperature of the CFRP molded body is rapidly increased, and gas generated inside the CFRP molded body is not sufficiently discharged to the outside of the molded body, and thus, explosion may be caused. The rapid oxidation causes a cotton-like form, and a tow-like form may not be formed.

Whether or not the decomposition has ended can be determined by observing presence or absence of fuming from the CFRP molded body, and a time point when the fuming has ended may be determined as an end point of the decomposition. At a time point when the decomposition has ended, absence of unusual odor is preferably confirmed. A gas concentration (for example, a concentration of oxygen, etc.) in atmosphere gas in the heating oven or in a path for discharging exhaust gas from the heating oven is measured and stabilization of the gas concentration is preferably confirmed.

A maintaining time in at least a temperature range of 300°C or higher and 400°C or lower needs to be a time up to the end of the decomposition of thermosetting resin, and is, for example, preferably one hour or longer and preferably five hours or shorter. The maintaining time refers to a residence time in a temperature range of 300°C or higher and 400°C or lower, and a time period from a time point when the temperature reaches 300°C to a time point when the temperature reaches 400°C in the temperature increasing process.

(1b) Temperature range of 400°C or higher and 480°C or lower

After the end of the decomposition of the CFRP molded body in a temperature range of 300°C or higher and 400°C or lower has been confirmed, heating to a temperature in a temperature range of 400°C or higher and 480°C or lower is performed. By heating to a temperature in a temperature range of 400°C or higher and 480°C or lower, a bundle in which carbon fibers are bundled into a tow with amorphous carbon that substantially contains no resin residue, can be obtained. The amorphous carbon preferably contains no resin residue.

The heating in a temperature range of 400°C or higher and 480°C or lower needs to be performed in atmosphere gas in which a concentration of oxygen is 16 to 18 volume%. When the concentration of oxygen is smaller than 16 volume%, since amorphous carbon is not easily generated, carbon fibers cannot be bundled into a tow. Furthermore, since an amount of residual carbon content becomes excessively large, workability of compounding with matrix resin cannot be improved. Moreover, the physical properties of the molded body cannot be stabilized. In addition, it takes time to generate the decomposition gas, a void generated after the decomposition becomes a closed pore (close hole), the pyrolysis rate is reduced, and a non-uniform phase is generated. Therefore, the concentration of oxygen is 16 volume% or more, preferably 16.3 volume% or more, and even more preferably 16.5 volume% or more. However, when the concentration of oxygen is more than 18 volume%, a thermosetting resin decomposition rate is increased, and a part of the thermosetting resin is burned without generating amorphous carbon, and oxidized and removed, and thus, the carbon fibers cannot be bundled into uniform tows, and a cotton-like product and a lumped product coexist. Furthermore, an amount of residual carbon content is excessively small, and thus, workability of compounding with matrix resin cannot be improved. Moreover, the physical properties of the molded body cannot be stabilized. Therefore, the concentration of oxygen is 18 volume% or less, preferably 17.8 volume% or less, and more preferably 17.5 volume% or less. The concentration of oxygen in the atmosphere in the heating oven may be measured by an oxygen concentration meter.

A maintaining time in a temperature range of 400°C or higher and 480°C or lower is at least 30 minutes. In a case where the maintaining time in this temperature range is at least 30 minutes, an amount of amorphous carbon for binding carbon fibers of the rCF tow to each other can be appropriately adjusted, and an amount of residual carbon content can be adjusted in an appropriate range, so that the tow can be precisely adjusted so as to have a preferable hardness. Furthermore, workability of compounding with matrix resin can be improved. Moreover, physical properties of the molded body can be stabilized. When the maintaining time is shorter than 30 minutes, an amount of amorphous carbon becomes large, and an amount of residual carbon content is excessively large, and therefore, carbon fibers are firmly bound into a lump-like form. As a result, it is difficult to stably meter an amount of the rCF tow, and it is also difficult to stably feed the rCF tow to an extruder. Therefore, it is difficult to use the rCF tows as a raw material for recycling. Therefore, the maintaining time is 30 minutes or longer, preferably 60 minutes or longer, and more preferably 90 minutes or longer. The upper limit of the maintaining time is, but is not particularly limited to, for example, preferably 180 minutes or shorter, more preferably 150 minutes or shorter, and even more preferably 120 minutes or shorter from the viewpoint of productivity. The maintaining time refers to a residence time in a temperature range of 400°C or higher and 480°C or lower, and a time period from a time point when the temperature reaches 400°C to a time point when the temperature reaches 480°C in the temperature increasing process.

In a temperature range of 400°C or higher and 480°C or lower, combustion gas may not necessarily flow in the heating oven. However, the combustion gas is preferably caused to flow. By heating in the flowing combustion gas, uneven heating is inhibited, and the CFRP molded body can be uniformly heated. In a case where combustion gas is caused to flow in the heating oven in a temperature range of 400°C or higher and 480°C or lower, an average flow rate of the combustion gas may be lower or higher than the average flow rate of the combustion gas for heating in the above-described temperature range of 300°C or higher and 400°C or lower, but the average flow rates may be equal to each other.

In the heating, pyrolytic gas (monomer of resin, pyrolytic hydrocarbons, etc.) derived from the CFRP molded body may exist, or, for example, $CO_2$ generated by combustion due to reaction between the pyrolytic gas and oxygen may exist. Furthermore, the heating may be performed while oxygen-containing gas is mixed with the above-described gases. By mixing oxygen-containing gas, a concentration of oxygen in atmosphere gas can be controlled. Slight increase of a concentration of oxygen and circulation of atmosphere gas progress pyrolysis of resin and oxidation of pyrolytic gas without greatly changing chemical equilibrium, so that matrix resin can be converted to amorphous carbon. Furthermore, by gradually progressing the reaction, while decomposition gas involving odor is, for example, introduced into a combustion chamber, subjected to complete combustion, and used as a heat source, a part of the decomposition gas is recirculated in a carbon fiber recovering furnace and the remaining part of the decomposition gas may be discharged through a deodorization device to the outside of the system, as combustion gas that does not substantially require additional exhaust gas treatment.

As oxygen-containing gas to be mixed, for example, air may be used. However, oxygen gas, inert gas containing oxygen gas, or the like may be used. As the inert gas, for example, nitrogen gas may be used.

After the heating and maintaining processes in a temperature range of 400°C or higher and 480°C or lower, cooling to 300°C or lower is performed. In the cooling, a concentration of oxygen in atmosphere gas is not particularly limited, and, for example, cooling may be performed in the air.

In a case where the treatment is repeated in the same heating oven, for example, a heat source is turned off when the treatment ends, circulation of atmosphere gas is continued, the rCF tow is taken out at 400°C or lower, and a new CFRP molded body is thereafter inserted in the heating oven cooled to about 300°C, and the succeeding batch process may be started after it is confirmed that the temperature of the CFRP molded body is stably 300°C or lower.

The CFRP molded body may be a recovered used product or a product recovered as a non-standard product. Furthermore, the CFRP molded body may be, for example, a prepreg end material generated during production or a product excluded by trimming. Preferably, such CFRP molded bodies are precisely separated according to what they are generated from, and traceability is strictly managed. When a recycle grade is indicated on the product, products recovered from markets are restrictively used, and are preferably distinguished precisely from recycled products recovered from processing. In a case where, for example, a plated layer or a coated layer is formed on the surface of the CFRP molded body, the plated layer or the coated layer is preferably removed in advance before the heating.

(2) Step of bringing rCF tow into contact with liquid containing surface modifier and thereafter drying the obtained product

The rCF tow obtained in the above-described (1) is brought into contact with a liquid containing the surface modifier having the second chemical functional group that has chemical affinity with the first chemical functional group existing on the surfaces of the carbon fibers, and the obtained product is thereafter dried, whereby the recycled-carbon-fiber tow composition of the present invention can be produced.

The liquid containing the surface modifier may be a surface treatment agent itself, or may be a liquid in which a surface treatment agent is dispersed or dissolved in water or an organic solvent. Examples of the solvent used for dispersing or dissolving the surface treatment agent include ethyl acetate, MEK, toluene, ethanol, IPA, methanol, and mixture solvents thereof. A concentration of the surface treatment agent in the liquid containing the dispersed or dissolved surface treatment agent is, for example, preferably 0.01 to 0.0001 weight%.

A method for bringing the rCF tow and the liquid containing the surface modifier into contact with each other is, but is not particularly limited to, for example, a method in which the rCF tow taken out from the heating oven is immersed in the liquid containing the surface modifier or a method in which the liquid containing the surface modifier is sprayed onto the rCF tow.

After the rCF tow and the liquid containing the surface modifier are brought into contact with each other, the obtained product is dried. The temperature for the drying is, for example, preferably 110°C to 180°C. In a case where the temperature for the drying is 110°C or higher, a water content or residual solvent can be reduced. The temperature for the drying is more preferably 115°C or higher and even more preferably 120°C or higher. However, when the temperature for the drying is higher than 180°C, a part of the surface modifier may be volatilized and removed, or pyrolysis thereof may occur in the air, and a remaining amount of the surface modifier becomes excessively small. Therefore, the temperature for the drying is preferably 160°C or lower, more preferably 135°C or lower, and even more preferably 130°C or lower.

The drying time is, for example, preferably 60 minutes to 180 minutes in a state where the rCF tow is uniformly spread on a drying shelf with a thickness of 100 mm.

Thus obtained rCF tow composition can be suitably used as a raw material of a CFRP molded body or a CFRTP molded body. The rCF tow composition is fed to an extrusion-molding machine, is mixed with thermosetting resin or thermoplastic resin that is separately fed, and is formed under known conditions into a CFRP molded body or a CFRTP molded body.

Particularly, the rCF tow composition can be suitably used for side-feeding in which the rCF tow composition is fed from a side feeder of an extrusion-molding machine.

The type of the extrusion-molding machine is not particularly limited, and is, for example, a single-screw extruder or a multi-screw extruder. The single-screw extruder is a one-screw extruder, and the multi-screw extruder is, for example, a twin-screw extruder or a composite extruder of a single-screw extruder and a twin-screw extruder.

The present application claims priority based on Japanese Patent Application No. 2021-090412 filed on May 28, 2021. All the contents described in Japanese Patent Application No. 2021-090412 are incorporated herein by reference.

Hereinafter, the present invention will be more specifically described by means of examples. However, the present invention is not limited by the following examples and can also be carried out with modifications being made within the scope of the gist described above and below, and each of these modifications are included in the technical scope of the present invention.


EXAMPLES


[Experiment 1]


In Experiment 1, a used compressed natural gas tank (CNG tank) was formed into a cylindrical shape by cutting dome portions on both ends, and an aluminium container disposed in the inner portion was separated and removed from the CNG tank in advance, and the CNG tank was used as a carbon fiber reinforced thermosetting resin molded body. The cylindrical CNG tank had a diameter of about 40 cm $\times$ a length of about 152 cm $\times$ a thickness of about 1 cm. Alternatively, only mouth piece portions on both ends were cut out, and the cylindrical portion was linearly cut from the dome portions and inserted into an oven. In this case, an aluminium liner was recovered as it was, and rCF having been halved was recovered in a laminated state, and rCF having larger fiber length was able to be recovered, whereby the succeeding cutting process was facilitated.

The cylindrical CNG tank was cut and divided into four portions having the same circumferential length. Thermoplastic resin constituting the cylindrical CNG tank was epoxy resin. The CNG tank divided into four portions was placed in a heating oven and maintained at 300°C to 400°C for 90 minutes, to carbonize the resin content, and heating to a temperature in a temperature range of 400°C or higher and 470°C or lower was thereafter performed. The four divided portions of the CNG tank did not overlap each other, a gap was formed, and the CNG tank was disposed such that combustion gas in the heating oven was brought into uniform contact with the surface of the CNG tank. That is, the CNG tank was disposed such that the longitudinal direction of the CNG tank coincided with (was parallel to) an atmosphere gas flowing direction.

A lid of the heating oven was closed, and a heat-resistant fan disposed at an exhaust portion of the heating oven was operated, and combustion gas was circulated in the heating oven in a period from a time point when the temperature in the heating oven reached 300°C to the end of heating. An average flow rate of the combustion gas in the heating oven was 0.05 m/second. Air was taken from a variable speed blower disposed in the heating oven, and a concentration of oxygen in atmosphere gas in the heating oven was measured by a zirconia-type oxygen sensor, and the concentration was controlled to be 18 volume%. The concentration of oxygen in atmosphere gas in the heating oven was 18 volume% from a time point when the temperature in the heating oven reached 300°C to a time point when the temperature reached 400°C, and was 16 volume% in a period from 400°C to the end of the heating. A maintaining time in a period from a time point when the temperature in the heating oven reached 300°C to a time point when the temperature reached 400°C was 1.5 hours. An average temperature increase rate in a period from a time point when the temperature in the heating oven reached 300°C to a time point when the temperature reached 400°C was 50°C/minute. Immediately before the temperature reached 400°C, a decomposed state of the CFRP molded body was confirmed in advance in an experimental oven. In a case where the decomposition ended, the heating was subsequently performed to increase the temperature. The end of the decomposition was determined by both confirmation in the experimental oven and observation as to presence or absence of fuming. In a case where no fuming occurred, the decomposition was determined to have ended. Presence or absence of unusual odor was also checked, and absence of the unusual odor was also confirmed. After the end of the decomposition was confirmed, the temperature reached by heating was set to 470°C and heating was performed. In a temperature range of 400°C or higher and 470°C or lower, the maintaining time was 30 minutes. After the end of the heating, cooling was performed and rCF tows were obtained. Thus obtained rCF tow was bundled into a tow with amorphous carbon derived from thermosetting resin. A proportion of the mass of the amorphous carbon to the mass of the rCF tow was 5%, a potential hydrogen amount of the rCF tow was 8000 ppm, and no resin residue was substantially contained.

Carboxyl groups (-COOH groups) existed as the first chemical functional group on the surfaces of carbon fibers contained in the rCF tow. An average fiber length of the carbon fibers constituting the rCF tow was 2000 mm, and the number of the carbon fibers was 24000 on average.

Next, thus obtained rCF tow and a liquid containing the surface modifier were brought into contact with each other, and thereafter dried, and a recycled-carbon-fiber tow composition was produced. An "acrylic ester emulsion adhesive" manufactured by TOAGOSEI CO., LTD. was prepared as the surface modifier, and water was added to the "acrylic ester emulsion adhesive", and the surface-modifier-containing liquid in which a solid content of the acrylic ester emulsion adhesive was 2 weight% was prepared. The surface modifier contained hydroxy groups (-OH groups) as the second chemical functional group, and the second chemical functional group has chemical affinity with carboxyl groups (-COOH groups) as the first chemical functional group existing on the surfaces of the carbon fibers.

The rCF tow was immersed in the liquid containing the surface modifier for five minutes, and the rCF tow and the liquid containing the surface modifier were thus brought into contact with each other. After the contact, the obtained product was slightly wrung by a roller and then dried. The drying was performed at 120°C. When the entirety of thus obtained rCF tow composition was 100 weight%, an amount of the surface modifier was 0.3 weight%. Thus obtained rCF tow composition was placed in a crucible having a lid and heated at 600°C for 60 minutes, and an amount of residual carbon content was measured. As a result, when the entirety of the recycled-carbon-fiber tow composition was 100 weight%, an amount of residual carbon content was 1.2 weight%.

After the drying, the rCF tow composition was cut such that the carbon fiber had a length of about 25 mm. No dust was substantially generated even when the rCF tow composition was cut, and thus, a cutting speed was able to be increased to 90% or more of a cutting speed of a cutting machine, and, furthermore, an amount of the rCF tow composition to be fed was able to be increased, so that a cutting amount per unit time was able to be 25 kg/hour (200 mm width cutting machine).

Next, the recycled-carbon-fiber tow composition having been cut to be 25 mm was fed from a side feeder of a twin-screw extruder, and compounded with 6-nylon resin (1013B manufactured by Ube Industries, Ltd.) fed from a main feeder, and strands (having an extruded noodle-like shape) were formed, and thereafter pelletized by using a pelletizer so as to have a length of 6 mm. Pellets in which 40 weight% of the recycled-carbon-fiber tow composition were blended with respect to 100 parts by mass of the 6-nylon were formed by a 180 ton injection-molding machine manufactured by NISSEI PLASTIC INDUSTRIAL CO., LTD. to produce a molded body.

No dust was generated even when the recycled-carbon-fiber tow composition was fed from the side feeder, and degradation of working environment was not found. Furthermore, the amorphous carbon tow material functioned, and the surface-treated recycled-carbon-fiber tow composition did not reduce a retaining strength even in the side feeder heated to the resin temperature, and was immediately compounded with the 6-nylon resin, and, at that time point, a uniformly disentangled state was obtained, and workability was good.

Next, the mechanical characteristics of thus obtained molded body were evaluated. As the mechanical characteristics, tensile strength at break and tensile elongation at break were measured in accordance with JIS K7161-2/1A/5. As a result, the tensile strength at break was 252.2 MPa and the tensile elongation at break was 1.66%. Furthermore, Charpy notched impact strength was measured at 23°C in accordance with JIS K7111-1/1eA. As a result, Charpy notched impact strength was 9 kJ/m$^2$.

[Experiment 2]

The recycled-carbon-fiber tow composition obtained in Experiment 1, and PES resin were mixed, and a molded body in which the thermoplastic resin was reinforced by using the recycled carbon fiber tow was produced. A twin-screw extruder was used for producing the molded body, and the recycled-carbon-fiber tow composition was fed from the side feeder. By blending 55 weight% of the recycled-carbon-fiber tow composition with respect to 100 parts by mass of the thermoplastic resin, the molded body was produced. No dust was generated even when the recycled-carbon-fiber tow composition was fed from the side feeder, and degradation of working environment was not found. Furthermore, the recycled-carbon-fiber tow composition and the PES resin were immediately compounded, and workability was good. A 7 mm thickness × 90 mm width extrusion port (die) was attached to the tip of the twin-screw extruder, and a plate-shaped molded body was produced by the extrusion. Thus obtained plate-shaped molded body had a specific gravity of 1.34, and the specific gravity was almost equal to the theoretical value. Thus obtained plate-shaped molded body was inserted into a mold, and was subjected to hot press molding, and a molded product having a mobile phone shape was obtained. The mechanical characteristics of thus obtained molded product were evaluated. As a result, the flexural strength was equivalent to that in magnesium die casting, and the flexural modulus was larger than 40 GPa.

[Experiment 3]

The 7 mm thickness × 90 mm width plate-shaped molded body obtained in Experiment 2 was inserted into a hot roll as it was, and stretched until the thickness became 0.5 mm, and a band-shaped molded body having a width of about 20 mm was produced.

[Experiment 4]

In Experiment 4, a molded body was produced without using a surface modifier, in the manner as described above for Experiment 1. That is, after the end of the heating in Experiment 1, the rCF tow obtained by cooling and thermoplastic resin were mixed, and a fiber-reinforced molded body was produced. The rCF tow obtained by cooling was cut such that the length of the carbon fiber was about 25 mm. However, since dust was generated in the cutting, cutting was performed merely at about 60% of the cutting speed of the cutting machine. An amount of the rCF tow composition to be fed was not able to be increased, and thus, a cutting amount per unit time was merely 5 kg/hour. As the thermoplastic resin, 6-nylon resin was used. A twin-screw extruder was used for producing the molded body, and the rCF tow was fed from the side feeder. By blending 30 weight% of the rCF tow with respect to 100 parts by mass of the thermosetting resin, the molded body was produced. By feeding the rCF tow from the side feeder, the generated dust was increased as compared with Experiment 1, and the working environment was slightly poor as compared with Experiment 1. Furthermore, as compared with Experiment 1, compounding property of the rCF tow with respect to the 6-nylon resin was slightly poor.

Next, the mechanical characteristics of thus obtained molded body were evaluated in the same manner as for Experiment 1. As a result, the tensile strength at break was 233 MPa, the tensile elongation at break was 1.3%, and the Charpy impact strength was 6.8 kJ/m$^2$.

**Claims**

1.  A recycled-carbon-fiber tow composition comprising:

    a recycled carbon fiber tow taken from a carbon-fiber-reinforced thermosetting resin molded body; and
    a surface modifier having a chemical functional group (hereinafter, referred to as second chemical functional group) that has chemical affinity with a chemical functional group (hereinafter, referred to as first chemical functional group) existing on a surface of the carbon fiber, wherein
    the recycled carbon fiber tow is formed such that carbon fibers are bundled into a tow with amorphous carbon that substantially contains no resin residue,
    the recycled-carbon-fiber tow composition contains 0.1 to 1 weight% of the surface modifier when an entirety of the recycled-carbon-fiber tow composition is 100 weight%, and
    an amount of residual carbon content measured when the recycled-carbon-fiber tow composition has been heated in a condition of 600°C×60 minutes is 1 to 5 weight%.

2.  The recycled-carbon-fiber tow composition according to claim 1, wherein

    the first chemical functional group is at least one selected from a carboxyl group, an aldehyde group, and a carbonyl group, and
    the second chemical functional group is at least one selected from a hydroxy group, an epoxy group, an acryloyl group, a phenyl group, an acrylic group, a urethane group, a silanol group, a siloxane group, an ester group, an imido group, a nitrile group, a stearate group, and a maleic acid group.

3.  A sheet formed from the recycled-carbon-fiber tow composition according to claim 1 or 2.

4.  A method for producing the recycled-carbon-fiber tow composition according to claim 1 or 2, the method comprising:

    a step of heating a carbon-fiber-reinforced thermosetting resin molded body to a temperature in a temperature range of 400°C or higher and 480°C or lower in a heating oven, and obtaining a recycled carbon fiber tow in which carbon fibers are bundled into a tow with amorphous carbon that substantially contains no resin residue; and
    a step of bringing thus obtained recycled carbon fiber tow into contact with a liquid containing a surface modifier that has the second chemical functional group having chemical affinity with the first chemical functional group

existing on a surface of the carbon fibers, and thereafter drying an obtained product, wherein
the step of obtaining the recycled carbon fiber tow includes heating the carbon-fiber-reinforced thermosetting resin molded body at a temperature in at least a temperature range of 300°C or higher and 400°C or lower in combustion gas flowing in the heating oven, and thereafter maintaining an obtained product at a temperature in a temperature range of 400°C or higher and 480°C or lower, in atmosphere gas in which a concentration of oxygen is 16 to 18 volume %, for at least 30 minutes.

5. The method according to claim 4, wherein combustion gas in the heating oven has an average flow rate of 0.1 to 10 m/second.

6. The method according to claim 4 or 5, wherein the heating at a temperature in the temperature range of 300°C or higher and 400°C or lower is performed until fuming from the carbon-fiber-reinforced thermosetting resin molded body ends.

[FIG. 1]

[FIG. 2]

(f)

(g)

| INTERNATIONAL SEARCH REPORT | International application No. |
|---|---|
| | **PCT/JP2022/012719** |

**A. CLASSIFICATION OF SUBJECT MATTER**

*C08J 11/12*(2006.01)i; *B29B 17/02*(2006.01)i
FI: B29B17/02 ZAB; C08J11/12

According to International Patent Classification (IPC) or to both national classification and IPC

**B. FIELDS SEARCHED**

Minimum documentation searched (classification system followed by classification symbols)

C08J11/12; B29B17/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-202810 A (FUJI KASHOKU CO LTD) 27 December 2018 (2018-12-27) claims, paragraphs [0001], [0010], [0017], [0038], [0042], [0047], [0050], [0062] | 1-6 |
| Y | JP 2014-196584 A (TOYOTA MOTOR CORP) 16 October 2014 (2014-10-16) claims 1, 3, 7, paragraphs [0001], [0006], [0020], [0026]-[0027], [0030], [0048] | 1-6 |
| A | WO 2012/086682 A1 (TORAY INDUSTRIES, INC) 28 June 2012 (2012-06-28) entire text | 1-6 |
| A | JP 2009-138143 A (TOYOTA MOTOR CORP) 25 June 2009 (2009-06-25) entire text | 1-6 |
| A | US 10829611 B1 (VARTEGA INC.) 10 November 2020 (2020-11-10) entire text | 1-6 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/012719**

| Patent document cited in search report | | | Publication date (day/month/year) | Patent family member(s) | | | Publication date (day/month/year) |
|---|---|---|---|---|---|---|---|
| JP | 2018-202810 | A | 27 December 2018 | (Family: none) | | | |
| JP | 2014-196584 | A | 16 October 2014 | (Family: none) | | | |
| WO | 2012/086682 | A1 | 28 June 2012 | US | 2013/0192434 | A1 | |
| | | | | EP | 2642007 | A1 | |
| | | | | CN | 103119209 | A | |
| | | | | KR | 10-2013-0139857 | A | |
| JP | 2009-138143 | A | 25 June 2009 | US | 2010/0267868 | A1 | |
| | | | | WO | 2009/072651 | A1 | |
| | | | | EP | 2233517 | A1 | |
| | | | | CN | 101889045 | A | |
| US | 10829611 | B1 | 10 November 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0699160 A
- JP H1150338 A
- JP 2018202810 A
- JP 2021090412 A

**Non-patent literature cited in the description**

- **KENJI USHIKOSHI ; NOBUYUKI KOMATSU ; MORIHIKO SUGINO.** Recycling of CFRP by Pyrolysis Method. *Material, The Society of Materials Science,* April 1995, vol. 44 (499), 428-431